# EUROPEAN PATENT SPECIFICATION

(11) **EP 1 786 275 B1**
(45) Date of publication and mention of the grant of the patent: **17.04.2013**
(21) Application number: 05761487.7
(22) Date of filing: 19.07.2005
(51) Int. Cl.: A23L 1/20

(54) **METHOD FOR ENHANCING THE CONTENT OF SOYBEAN SEED GAMMA-AMINOBUTYRIC ACID**
VERFAHREN ZUR ERHÖHUNG DES GABAS IN SOJABOHNEN
PROCEDE DESTINE A AUGMENTER LA TENEUR EN ACIDE GAMMA-AMINOBUTYRIQUE DE GRAINES DE SOJA

(30) Priority: 20.07.2004 KR 20040056591
(43) Date of publication of application: 23.05.2007
(73) Proprietor: CJ Cheiljedang Corporation, Jung-gu, Seoul 100-749 (KR)
(72) Inventor: KWON, Soon Hee, Deungchon 3(sam)-dong, Gangseo-gu, Seoul (KR); PARK, Hong-Wook, Sinjeong 1(il)-dong, Yangcheon-gu, Seoul (KR); SOHN, Kyung Hyun, Yongin-si, Gyeonggi-do 449-515 (KR)
(74) Representative: Mai, Dörr, Besier
(86) International application number: PCT/KR2005/002325
(87) International publication number: WO 2006/073231

(56) References cited:
- JP-A- 11 225 696
- JP-A- 2002 000 213
- JP-A- 2002 000 214
- JP-A- 2003 180 276
- KR-A- 2003 021 119
- KR-A- 2004 000 639
- KR-A- 20030 021 119
- KR-A- 20040 000 639
- US-A1- 2003 161 910
- RAMPUTH AL-IDRISSI ET AL: "Rapid gamma-aminobutyric acid synthesis and the inhibition of the growth and development of oblique-banded leaf-roller larvae" PLANT PHYSIOLOGY (ROCKVILLE), vol. 111, no. 4, 1996, pages 1349-1352, XP002533836 ISSN: 0032-0889
- WALLACE WILLIAM ET AL: "Rapid accumulation of.gamma.-aminobutyric acid and alanine in soybean leaves in response to an abrupt transfer to lower temperature, darkness, or mechanical manipulation" PLANT PHYSIOLOGY, AMERICAN SOCIETY OF PLANT PHYSIOLOGISTS, ROCKVILLE, MD, US, vol. 75, 1 January 1984 (1984-01-01), pages 170-175, XP002173915 ISSN: 0032-0889
- MAYER R R ET AL: "EFFECTS OF HEAT SHOCK ON AMINO ACID METABOLISM OF COWPEA CELLS" PLANT PHYSIOLOGY (ROCKVILLE), vol. 94, no. 2, 1990, pages 796-810, XP002533837 ISSN: 0032-0889

## Description

### Technical Field

The present invention relates to a method of increasing gamma-aminobutyric acid content in soybean seeds

### Background Art

Gamma-amino butyric acid (GABA) is a non-protein amino acid that is ubiquitous in plant. GABA is biosynthesized from glutamic acid by the enzyme glutamate decarboxylase (GAD). Like most amino acids, glutamic acid is degraded into α-ketoglutarate, which is then processed into succinyl-CoA and succinate via the TCA cycle in plants. It is known that when plants are under physical or chemical stress, GAD is activated in response to the stress to promote the synthesis of GABA from glutamic acid, resulting in an increase in GABA levels in plants.

In animals, GABA plays an important role as an inhibitory neurotransmitter in the central nervous system. GABA is known to be involved in the control of various physiological mechanisms. In animals, GABA enhances the metabolic function of brain cells by increasing cerebral blood flow and oxygen supply. Also, it is reported that the abnomality of GABA, GABA receptors, or GAD, leading to decreases in their leves in the brain, is likely to cause alcoholic brain diseases. In addition, GABA is of pharmaceutical interest because it is revealed to be involved in the secretion of prolactin and growth hormones and exhibit various in vivo functions, including excitement suppression, anti-convulsion, improvement of metal concentration and memory, hypotensive activity, enhancement of insulin effects, anti-depression activity, etc.

In plants, however, the precise role of GABA has yet to be determined. Recent studies have revealed that GABA-related genes are also found in plants (Zik et al., Plant Mol Biol. 1998 Aug; 37(6): 967-75 and Turano et al., Plant Physiol. 1998 Aug; 117(4): 1411-21) and GABA plays an important role in the mechanism of defense against plant pathogens (Zimmerli et al., Proc Natl Acad Sci USA. 2000 Nov 7; 97(23): 12920-5), implying that an increase in GABA within plants could lead to an increase in plant crops, and properly processed forms of plants having increased GABA levels could provide various pharmaceutically advantageous efficacies for humans and animals.

Plants are found to increase their GABA levels when experiencing stress. Various physical stresses (moisture, temperature, radiation, light, anaerobic conditions, etc) as well as chemical stresses make plants accumulate GABA therein. With the report on the GABA synthesis induced by various environmental factors (mechanical stimuli, temperature, oxygen deficiency, moisture stress, etc) in plants in addition to the above revelations, plants are believed to have a mechanism of producing GABA as a countermeasure against environmental stresses. For example, the level of GABA in plants increases with changes in environmental conditions, including high acidity, mechanical stress, low temperature, hypooxygenaton, heating, aridity, high salt concentrations, virus infection, etc. (Crawford et al., Plant Physiol. 1994 Mar; 104(3): 865-871; Ramputh et al., Plant Physiol. 1996 Aug; 111(4): 1349-1352; Wallace et al., Plant Physiol. 1984 75: 170-175; Aurisano et al., Phytochemistry 1995, 38:1147-1150; Mayer et al., Plant Physiolo. 1990, 94: 796-810; Thompson et al., Plant Physiol., 1996, 41: 1578-1582; Bolarin et al., J. Plant Physiol., 1995, 47: 463-468; Cooper et al., Ann. Bot., 1974, 38:625-638). Results of the research and studies conducted thus far strongly suggest that there is a close relationship between GABA accumulation and stress relief after stress detection by plants even though there is no relationship between stresses. That is, there is a signal transduction pathway with GABA acting as a signaling molecule. Besides, when plants are attacked by insects, GABA is synthesized, enabling the plants to exhibit insect tolerance.

With the increasing disclosure of the physiological activities of GABA, interest in the use of GABA in functional foods as well as medical supplies has recently increased. Accordingly, it is required to develop foods having high GABA content that are useful for the prevention and treatment of concerned diseases. In association with the control of GABA synthesis by the introduction of related genes into plants, the introduction of glutamate decarboxylase or the calmodulin gene in tobacco plants was reported to increase GABA. However, because genetically modified crops and foods incur violent debate, it is difficult to realize this gene modification.

Soybeans are a material for soy sauce, fermented soybean paste, tofu (bean curd), soybean oil, etc. and are used in various foods. Currently commercially available soybeans are poor in GABA content, so that foods made from soybeans cannot provide sufficient GABA for people who ingest them. U.S. Pat. Publication No. 2003-161910 discloses a fermented soybean food rich in GABA, produced by the fermentation of soybeans with Tempe molds Rhizopus genus. According to Japanese Pat. Unexamined Publication No. 11-151072, GABA can be obtained in an amount of 116mg per 100g of soybean by immersing soybean seeds in weakly acidic water at 40°C for 4 hours with agitation. Korean Pat. Application No. 2002-36295 discloses an increase of GABA in soybean by the concurrent application of physical stress (low temperature: 15°C anaerobic condition) and chemical stress (saline treatment).

KR 2003/0021119 A discloses a method for increasing the GABA content in soybeans by causing physical stress through temperature changes including a soaking step in distilled water at 4 to 25°C for 72 hours followed by freezing in liquid nitrogen(at -196°C) and ending with a thawing step at 4 °C for 15 minutes that results in an increase of up to 5 times the original GABA concentration.

However, there still exists a need for a method for increasing natural GABA in soybeans and obtaining a large quantity of GABA with economical advantage.

### Disclosure of the Invention

Leading to the present invention, intensive study on the increase of GABA in soybeans, conducted by the present inventor, resulted in the finding that a freezing and thawing treatment in association with an immersion treatment exceptionally increases GABA in soybean seeds.

Therefore, it is an object of the present invention to provide a method of enriching GABA in soybean seeds.

### Best Mode for Carrying Out the Invention

The present invention pertains to the enrichment of gamma-aminobutyric acid (GABA) in a soybean seed.

In an embodiment of the present invention, a method of enriching GABA in a soybean seed is provided, which comprises immersing the soybean seed; freezing the immersed soybean seed; and thawing the frozen soybean seed.

The term "soybean seed" as used herein means a seed of soybean, which is not limited by plant variety or shape. For example, all soybeans can be used in the present invention regardless of their production areas, e.g., Korea, North America, South America, China, Japan, etc. and of their constitutions, e.g., high protein content, as in the varieties Keumkang daerib, Keumkang sorib, Jeonju jae-re, Jang-dan-bag-doo, and high lipid content, as in the varieties Scott, Manjutae, Oial bean, Yellow bean, etc. Whole seeds, peeled seeds, and hypocotyl-deprived seeds can also be used. Soybeans are preferable as a GABA source not only because they are used in various readily available processed forms, including soy sauce, fermented soybean paste, soya milk, bean curd, etc. but also because they are inexpensive.

Conventionally, the enrichment of GABA in soybeans is achieved by simple processes such as the immersion of soybeans in water at temperatures above zero degrees Celsius, the treatment of soybeans under acidic conditions, or the fermentation of soybeans with microorganisms or concurrent processes including treatments at low temperatures above zero degrees Celsius (15°C), under anaerobic and saline conditions.

In the present invention, GABA can be enriched up to 1914.4 µg/g of dried soybean through a series of processes, that is, immersing, freezing and thawing. The GABA content of soybean increases 27 fold upon the treatment of the present invention compared to no treatment (70 µg/g of dried weight) and 3 fold compared to immersion alone (Example 2). The soybean treated according to the present invention contains GABA in an amount 1.7 times larger than that of the soybean according to Japanese Pat. Unexamined Publication No. 11-151072.

For the Immersion of soybean seeds, various kinds of water, e.g., tap water, distilled water, mineral water, etc, may be used. The immersion may be continued for 5 hours or longer, and preferably for 6 to 14 hours, using water amounting to about 10 times the weight of the soybeans. As for immersion temperature, it is suitably maintained at zero degrees Celsius or higher, and preferably from zero to 40 °C. The content of GABA in soybeans increases with temperature, with a peak at 30 to 40 °C. In the case of soybean-processed foods, such as tofu, soy milk, soybean oil, etc., the immersion temperature is on the order of 10 to 25 °C and conveniently on the order of 10 to 15 °C when account is taken of price and GABA content.

Next, the soybean seeds, after excess water is removed, are frozen at below zero degrees Celsius. The freezing temperature is effective if it is below zero degrees Celsius and is preferably on the order of -40 to 0°C, more preferably on the other of -32 to -5°C, and most preferably on the order of -32 to -19°C. The freezing process is conducted for 6 hours or longer, preferably for 6 to 24 hours, more preferably for 12 to 24 hours, and most preferably 18 to 24 hours.

Finally, the frozen soybean seeds are thawed at above zero degrees Celsius, preferably at 10 to 40°C, more preferably at 15 to 35°C, and most preferably 20 to 30°C. The content of GABA increases with a decrease in the freezing temperature and/or an increase in the thawing time period.

In a preferred embodiment, the present invention provides a method of enriching GABA in soybean seeds, comprising immersing soybean seeds in water at 0 to 40°C; freezing the soybean seeds at a temperature of -40 to 0°C; and thawing the frozen soybean seeds at a temperature of 10 to 40°C.

In a more preferred embodiment, the present invention provides a method of enriching GABA in soybean seeds, comprising immersing soybean seeds in water at 10 to 25°C; freezing the soybean seeds at a temperature of -32 to -20°C; and thawing the frozen soybean seeds at a temperature of 20 to 30°C.

In a far more preferred embodiment, the present invention provides a method of enriching GABA in soybean seeds, comprising immersing soybean seeds in water at 15°C; freezing the soybean seeds at a temperature of -32°C; and thawing the frozen soybean seeds at a temperature of 20°C.

GABA content of soybean seeds can be quantitatively analyzed by a conventional process, for example, a freeze-drying method. A concrete example is that suggested by the Institute of Public Health and Environment, Japan.

In accordance with the present invention, the enrichment of GABA in soybean seeds may be achieved by additional physical, chemical, biological and/or mechanical treatments such as hypo-oxygenation, ultrasonication, radiation, treatment with saline or a solution of chitosan or glutamic acid, fermentation with microorganisms, etc., in association with the processes suggested according to the present invention.

The soybean seed according to the present invention contains GABA in an amount of 1900 µg or more per g of weight of dried soybean seed, and can be processed into various functional foods. For instance, the GABA-enriched soybean seeds may be used to produce soy milk, soybean oil, tofu, tofu-residue, bean powder, soy sauce, fermented soybean paste, thick soypaste mixed with red pepper, yogurt, ice cream, bean sprouts, etc., all of which can be used as health foods exhibiting various in vivo functions, including excitement suppression, anti-convulsion, improvement of metal concentration and memory, hypotensive activity, enhancement of insulin effects, anti-depression activity, etc. Further, new health foods can be prepared from the soybean seeds of the present invention in mixture with other physiologically active materials.

A better understanding of the present invention may be obtained through the following examples which are set forth to illustrate, but are not to be construed as the limit of the present invention.

### EXAMPLE 1: Change in GABA Content with Immersion Temperature

500 g of soybean seeds (produced in U.S.A.) in 5000 ml of water were immersed in each of the incubators (JEIO TECH, BI-500MP Low TEMP.) respectively maintained at temperatures of 10 °C, 15 °C, 20 °C, 25 °C, 30 °C, 35 °C, and 40 °C for 6 to 14 hours, during which 100 g of the soybean seeds at respective temperatures were sampled at regular intervals of 2 hours. Sample soybean seeds were freeze-dried using a freeze-drier (Virtis company, Gardiner 12525) and subjected to the pretreatment according to the Institute of Public Health and Environment, Japan. That is, 1g of a sample was homogenized and refluxed three times with 30 ml of 75% ethanol at 80°C for 20 min. 20 ml of the filtrate obtained through the filtration of the ethanol extract was concentrated to 5 ml which was then filtered through a 0.45 µm filter and reacted with o-phthaldehyde. The resulting derivate was detected using an HPLC column under the following conditions (analysis method according to the Institute of Public Health and Environment, Japan) and analyzed for GABA content using a standard curve, with non-immersed soybean seeds used as a control.

### Analysis Conditions

1) Instrument: Agilent HPLC1100, Fluorescence Detector
2) Column: ZORBAX Eclipse (150mm X 4.5mm, Agilent)
3) Column Temp.: 35°C
4) Solvent: 40mM Na₂HPO₃ (A), ACN/MeOH/D.W.=45:45:10(B)
5) Flow Rate: 2.0mL/min
6) Elution amount: 20 µL
7) Pump program (gradient)

| Time (min) | A (%) | B(%) |
|---|---|---|
| 0 | 100 | 0 |
| 1.9 | 100 | 0 |
| 18.1 | 43 | 57 |
| 18.6 | 0 | 100 |
| 22.3 | 0 | 100 |
| 23.2 | 100 | 0 |
| 26 | 100 | 0 |

8) Detector: Fluorescence Detector (Peakwidth>0.5min)

| Time (min) | Excitation | Emission | PMT Gain |
|---|---|---|---|
| 0 | 340 | 450 | 10 |
| 15 | 266 | 305 | 9 |

**TABLE 1**

| (GABA µg/dried mass(g)) | | | | | |
|---|---|---|---|---|---|
| Temp (°C) | Time (hr) | | | | |
| | 6 | 8 | 10 | 12 | 14 |
| 10 | 543.5 | 520.2 | 580.7 | 526.6 | 554.1 |
| 15 | 588.1 | 643.7 | 607.6 | 541.7 | 384.4 |
| 20 | 535.8 | 507.4 | 388.1 | 604.3 | 564 |
| 25 | 574.7 | 580.1 | 506.7 | 639.9 | 591.8 |
| 30 | 637.9 | 586.5 | 688.3 | 710 | 694.8 |
| 35 | 676 | 701.9 | 772.5 | 747.1 | 727.3 |
| 40 | 662.6 | 768.1 | 715.2 | 634.8 | 664.2 |

As is apparent from Table 1, the immersed soybean seed increases in GABA content, compared to the control (70 µg/g of dried mass), with peaks upon immersion at high temperatures of 30 to 40°C. Short-term immersion was effective because, as the time period of immersion was extended, the GABA content did not increase in proportion thereto.

### EXAMPLE 2: Change in GABA Content with Freezing and Thawing Temperatures

After water was removed, 100 g of the soybeen seeds immersed at 15°C for 8 hours in Example 1 were kept in a freezer (ILSHIN DEEP FREEZER, GUDERO) at -4°C, -20°C or -32°C for 12 or 24 hours. Afterwards, the soybean seeds were transferred into a chamber set at 20°C or 30°C and allowed to stand for 12 or 24 hours, followed by analysis for GABA content. The results (changes in GABA content according to freezing and thawing temperatures) are given in Table 2, below.

**TABLE 2**

| Freeze. Temp | Thawing Temp. | Thawing Time Period | GABA Content (µg/dried mass(g)) |
|---|---|---|---|
| -4°C | 20°C | 12 | 756.2 |
| | | 24 | 885.6 |
| | 30°C | 12 | 884.3 |
| | | 24 | 983.6 |
| -20°C | 20°C | 12 | 1312.2 |
| | | 24 | 1582.0 |
| | 30°C | 12 | 904.2 |
| | | 24 | 937.5 |
| -32°C | 20°C | 12 | 1532.6 |
| | | 24 | 1914.4 |
| | 30°C | 12 | 1213.4 |
| | | 24 | 1327.6 |

| | | | |
|---|---|---|---|
| *control: 70 µg/dried weight (g) *GABA content of soybean seeds immersed at 15°C for 8 hr: 643.7 µg/dried mass(g) | | | |

As understood from Table 2, a series of immersing, freezing and thawing treatments enriches GABA in soybean seeds 27.3 fold, compared to non-treatment, and 3 fold compared to immersion only. Also, the data of Table 2 indicates that the content of GABA increases with the decrease of freezing temperatures and with the increase of thawing temperatures.

### Industrial Applicability

As described hereinbefore, soybean seeds can be enriched with GABA in accordance with the present invention and can be processed into health.

## Claims

1. A method of increasing gamma-aminobutyric acid content in soybean seeds, comprising immersing the soybean seeds in water maintained from 0 to 40°C for 6 to 14 hours; freezing the soybean seeds at a temperature from -40 to 0°C for 6 to 24 hours; and thawing the frozen soybean seeds at a temperature from 10 to 40°C for 12 to 24 hours.

## Patentansprüche

1. Verfahren zur Erhöhung des Gamma-Aminobuttersäure-Gehaltes von Sojasaatgut, welches das Eintauchen des Sojasaatguts in Wasser umfasst, welches 6 bis 14 Stunden lang bei 0 bis 40°C gehalten wird; das 6- bis 24-stündige Einfrieren des Sojasaatguts bei einer Temperatur von -40 bis 0°C; sowie das 12- bis 24-stündige Auftauen des eingefrorenen Sojasaatguts bei einer Temperatur von 10 bis 40°C.

## Revendications

1. Procédé destiné à augmenter la teneur en acide gamma- aminobutyrique dans les graines de soja, comprenant l'immersion des graines de soja dans l'eau maintenue de 0 à 40 °C pour 6 à 14 heures ; la congélation des graines de soja à une température de -40 à 0 °C pour 6 à 24 heures ; et la décongélation des graines de soja congelées à une température de 10 à 40 °C pour 12 à 24 heures.
